# FASCICULE DE BREVET EUROPEEN

(11) **EP 3 684 549 B1**
(45) Date de publication et mention de la délivrance du brevet: **08.12.2021**
(21) Numéro de dépôt: 18769733.9
(22) Date de dépôt: 21.09.2018
(51) Int. Cl.: B25B 13/48, B25B 23/00, B25B 31/00, F16B 19/10

(54) **DOUILLE DE FIXATION POUR L'ASSEMBLAGE DE STRUCTURES ET FIXATION ASSOCIÉE**
BEFESTIGUNGSSOCKEL ZUR MONTAGE VON STRUKTUREN UND ZUGEHÖRIGE BEFESTIGUNG
FASTENING SOCKET FOR ASSEMBLING STRUCTURES AND ASSOCIATED ATTACHMENT

(30) Priorité: 21.09.2017 FR 1758734
(43) Date de publication de la demande: 29.07.2020
(73) Titulaire: Lisi Aerospace, 75012 Paris (FR)
(72) Inventeur: PALETTE, Steven, 18380 Mery Es Bois (FR); BRACHET, Julien, 18500 Mehun Sur Yevre (FR); DEFRANCE, Vincent, 18120 Preuilly (FR)
(74) Mandataire: Lavoix
(86) Numéro de dépôt international: PCT/EP2018/075578
(87) Numéro de publication internationale: WO 2019/057880

(56) Documents cités:
- EP-A1- 3 147 520
- DE-A1- 4 400 895
- DE-A1-102015 109 278
- JP-A- S62 167 913
- US-A- 3 096 678

## Description

La présente invention concerne une douille de fixation pour l'assemblage d'au moins deux structures préalablement percées, ladite douille s'étendant selon un axe principal entre une première et une deuxième extrémités ouvertes, ladite douille comprenant un corps sensiblement cylindrique et une tête élargie, ladite tête élargie comprenant des premières surfaces de montage aptes à s'assembler à un premier élément d'installation et à bloquer en rotation ledit premier élément d'installation autour de l'axe principal.

L'invention s'applique particulièrement aux fixations temporaires de type agrafes d'épinglage.

Dans l'industrie aéronautique, avant de réaliser l'assemblage définitif de deux éléments de structure, il est connu de procéder à un assemblage provisoire desdits éléments au moyen de fixations temporaires insérées dans des trous traversants. De telles fixations temporaires sont notamment décrites dans le document EP2247862.

Au cours du montage desdites fixations temporaires, un premier outil de montage bloque la douille en rotation dans le trou traversant tandis qu'un deuxième outil entraîne en rotation une vis disposée dans la douille. Ladite douille doit donc être bloquée solidement pendant le vissage, sous peine d'être elle-même entraînée en rotation.

Par ailleurs, dans le cas d'un montage des fixations temporaires réalisé par un automate, la fixation doit pouvoir être saisie et déplacée facilement par ledit automate.

Enfin, la fixation doit pouvoir être retirée complètement des trous traversants par un automate, même en présence de mastic disposé préalablement dans le trou, ayant potentiellement commencé à polymériser.

Les fixations temporaires du document EP2247862 présentent notamment des encoches en croix ménagées dans la tête de douille. Ces encoches peuvent être à l'origine d'un blocage insuffisant de la douille, notamment lorsqu'un couple important est exercé sur la vis. Par ailleurs, de telles encoches ne permettent pas à elles seules une préhension suffisante de la fixation par un automate, ce qui implique de munir ledit automate de moyens de préhension supplémentaires.

D'autres dispositifs sont présentés dans EP3147520A1, US3096678A, DE102015109278A1 et DE4400895A1.

La présente invention a pour but de remédier à ces inconvénients. A cet effet, l'invention propose une douille selon la revendication 1 et un nez de pose selon la revendication 10.

Suivant un aspect avantageux de l'invention, la douille de fixation est telle que les premières surfaces de montage comprennent des méplats formés radialement en saillie par rapport à une surface interne cylindrique de la première empreinte.

L'invention se rapporte en outre à une fixation pour l'assemblage d'au moins deux structures préalablement percées, comprenant une douille selon la revendication 1 et un élément allongé, mobile à l'intérieur de la douille, ledit élément allongé comprenant une tige sensiblement cylindrique et une tête disposée à une première extrémité de ladite tige, ladite tête de l'élément allongé comprenant une deuxième empreinte sensiblement cylindrique s'étendant selon l'axe principal, ladite deuxième empreinte comprenant des deuxièmes surfaces de montage aptes à s'assembler à un deuxième élément d'installation et à solidariser en rotation l'élément allongé et ledit deuxième élément d'installation autour de l'axe principal.

Suivant d'autres aspects avantageux de l'invention, la fixation comporte l'une ou plusieurs des caractéristiques suivantes, prises isolément ou suivant toutes les combinaisons techniquement possibles :
- la douille comporte un anneau interne de guidage axial de la tige de l'élément allongé, ledit anneau s'étendant radialement à partir d'une surface interne du corps ;
- la tige de l'élément allongé est pourvue d'un filetage ;
- la fixation comporte en outre un élément d'accrochage comprenant : une base apte à coulisser dans la douille selon l'axe principal, ladite base comprenant une ouverture centrale ; et des pattes reliées à ladite base autour de l'ouverture centrale, lesdites pattes s'étendant à travers la deuxième extrémité ouverte de la douille, chaque patte comprenant un bec d'accrochage ; l'élément allongé étant mobile selon l'axe principal dans l'ouverture centrale de la base, de sorte à déplacer radialement les pattes entre une position rétractée et une position déployée ;
- l'ouverture centrale de la base est pourvue d'un taraudage complémentaire du filetage de la tige de l'élément allongé ;
- une seconde extrémité de l'élément allongé comporte un ergot s'étendant selon l'axe principal depuis la tige, ledit ergot ayant une dimension transversale inférieure à une dimension transversale de la tige, la fixation comprenant en outre une bague assemblée audit ergot, ladite bague formant une butée axiale par rapport à la base de l'élément d'accrochage ;
- la bague comporte une première et une seconde portions sensiblement cylindriques, alignées axialement, lesdites première et seconde portions ayant respectivement un diamètre externe inférieur et supérieur à un diamètre minimal de l'ouverture centrale de la base, une jonction entre lesdites première et seconde portions formant la butée axiale.

L'invention se rapporte en outre à un nez de pose selon la revendication 10.

Suivant un aspect avantageux de l'invention, le nez de pose comporte l'une ou plusieurs des caractéristiques suivantes, prises isolément ou suivant toutes les combinaisons techniquement possibles :
- les première et deuxième surfaces radiales sont configurées de sorte que, dans une deuxième configuration dite de verrouillage, une portion de la deuxième surface radiale forme une saillie externe par rapport à la première surface radiale.

L'invention se rapporte en outre à un ensemble pour l'installation d'une fixation, ledit ensemble comprenant une fixation telle que décrite ci-dessus et un nez de pose tel que décrit ci-dessus.

Suivant un aspect avantageux de l'invention, ladite fixation et ledit nez de pose sont configurés de sorte que, dans la deuxième configuration de verrouillage, la collerette est apte à être bloquée axialement entre l'épaulement plan et les premières surfaces de montage de la douille.

L'invention sera mieux comprise à la lecture de la description qui va suivre, donnée uniquement à titre d'exemple non limitatif et faite en se référant aux dessins sur lesquels :
- la figure 1 est une vue coupe d'une douille selon un premier mode de réalisation de l'invention ;
- les figures 2 et 3 sont des vues, respectivement latérale et en coupe, d'une fixation comprenant la douille de la figure 1 ;
- la figure 4 est une vue en perspective, en coupe, d'une fixation comprenant la douille selon un deuxième mode de réalisation de l'invention ; et
- la figure 5 est une vue de détail, latérale, d'un ensemble d'installation comprenant la fixation de la figure 4 et un nez de pose selon un premier mode de réalisation de l'invention ;
- la figure 6 est une vue en coupe du nez de pose de la figure 5 ;
- la figure 7 est un vue de détail du nez de pose des figures 5 et 6 ;
- les figures 8 et 9 sont des vues de détail en perspective du nez de pose des figures 5 à 7, respectivement dans une première et une deuxième configurations ; et
- la figure 10 est une vue en coupe d'un nez de pose selon un deuxième mode de réalisation de l'invention.

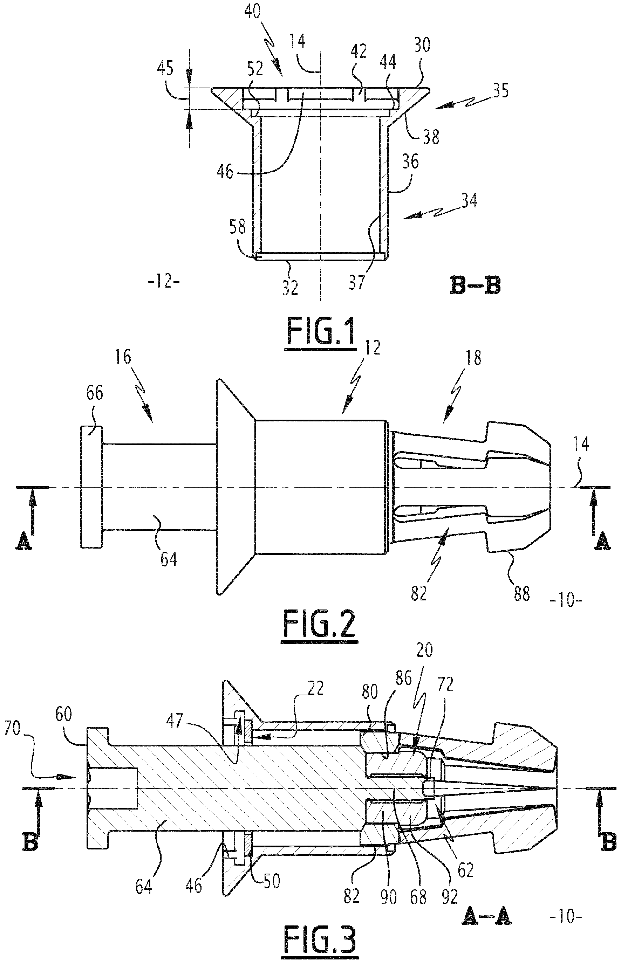

Les figures 2 et 3 représentent une fixation 10 selon un premier mode de réalisation de l'invention, comprenant une douille de fixation 12 selon un premier mode de réalisation de l'invention. La douille 12 est représentée seule à la figure 1.

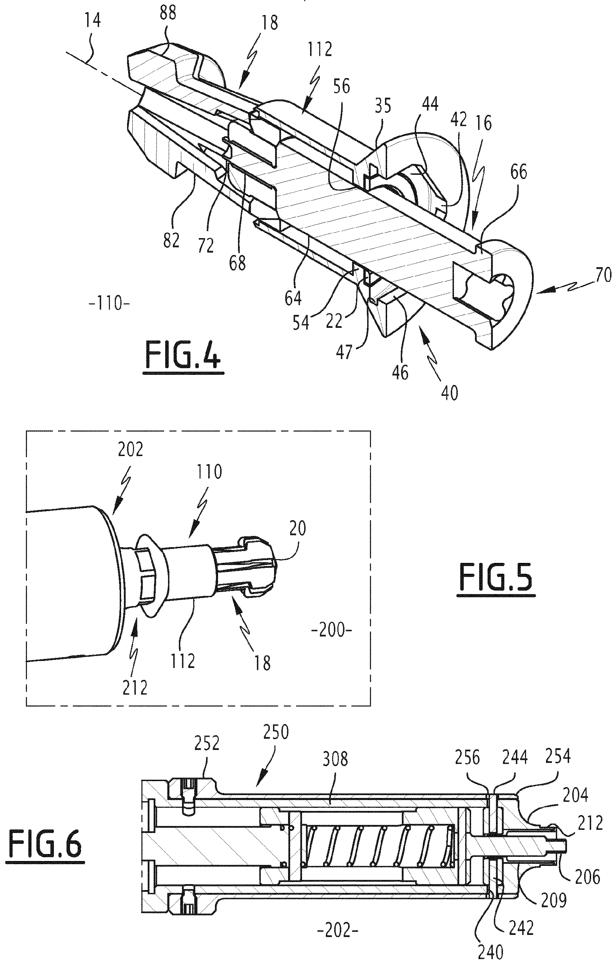

La figure 4 représente une fixation 110 comprenant une douille de fixation 112 selon un deuxième mode de réalisation de l'invention.

Dans la description qui suit, les fixations 10 et 110 ainsi que les douilles 12 et 112 seront décrites simultanément, les éléments communs étant désignés par les mêmes numéros de référence.

Dans les modes de réalisation représentés, la fixation 10, 110 est une attache amovible, destinée à l'assemblage temporaire de deux structures (non représentées) préalablement percées. En variante, la douille 12, 112 est incorporée à un autre type de fixation, par exemple une fixation permanente.

La fixation 10, 110 s'étend selon un axe principal 14 définissant une direction axiale, et comporte : la douille 12, 112 ; un élément allongé 16 ; un élément d'accrochage 18, une bague d'assemblage 20 et une rondelle d'appui 22.

La douille 12, 112 a une forme sensiblement tubulaire, s'étendant selon l'axe principal entre une première 30 et une deuxième 32 extrémités ouvertes. La douille 12, 112 comprend un corps 34 et une tête élargie 35.

Le corps 34 comporte une surface externe 36 et une surface interne 37, sensiblement cylindriques. La surface externe 36 est cylindrique de révolution. La surface interne 37 présente une forme anti-rotation. Ladite surface interne est de préférence formée de pans et présente par exemple une section hexagonale ou octogonale.

Dans les modes de réalisation représentés, la tête élargie 35 présente une surface externe tronconique 38 destinée à prendre place dans une fraisure de l'une des structures à assembler. La tête élargie 35 présente également une surface plane, sensiblement perpendiculaire à l'axe principal 14 et formant la première extrémité 30 de la douille 12, 112.

La tête élargie 35 comporte une première empreinte 40 sensiblement cylindrique, s'étendant selon l'axe principal 14 depuis la première extrémité 30. Dans les modes de réalisation représentés, la première empreinte 40 comporte notamment une surface interne 42 cylindrique de révolution.

La première empreinte 40 aboutit axialement à un premier épaulement 44, reçu à l'intérieur de la tête élargie 35. Le premier épaulement 44 est plan et sensiblement perpendiculaire à l'axe principal 14. Dans les modes de réalisation représentés, le premier épaulement 44 a une forme annulaire.

La première empreinte 40 présente notamment une profondeur 45 selon l'axe principal 14, entre la première extrémité 30 de la douille 12, 112 et le premier épaulement 44.

La tête élargie 35 comporte en outre des premières surfaces de montage 46 aptes à bloquer l'empreinte 40 en rotation autour de l'axe principal. Lesdites premières surfaces de montage 46 présentent une forme anti-rotation et sont de préférence formées de méplats, disposés selon des plans s'étendant axialement. Les méplats 46 s'étendent à partir de la première extrémité 30 de la douille 12, 112 mais n'atteignent pas le premier épaulement 44.

Dans les modes de réalisation représentés, les méplats 46 sont en saillie radiale par rapport à la surface interne cylindrique 42, de sorte qu'un diamètre passant par les centres des méplats 46 est inférieur au plus grand diamètre du premier épaulement 44. Ledit épaulement 44, une extrémité axiale des méplats 46 et la surface interne cylindrique 42 définissent ainsi un volume en creux 47.

La première empreinte 40 est prolongée axialement par une gorge circulaire 50, ladite gorge ayant un diamètre inférieur au diamètre de la surface interne cylindrique 42. La gorge 50 aboutit axialement à un deuxième épaulement 52 plan, sensiblement perpendiculaire à l'axe principal 14. La gorge 50 et l'épaulement 52 sont notamment aptes à recevoir la rondelle 22.

Comme visible sur les figures 1 et 2, l'épaulement 52 de la douille 12 débouche radialement sur la surface interne 37 du corps 34. En revanche, comme visible sur les figures 4 et 6, l'épaulement 52 de la douille 112 est prolongé radialement par un anneau 54 en saillie par rapport à ladite surface interne 37. L'anneau 54 comporte un orifice circulaire 56, disposé selon l'axe principal 14.

La deuxième extrémité 32 de la douille 12, 112 comporte une collerette de sertissage 58. Sur les figures 1 à 6, la collerette de sertissage 58 est représentée avant déformation.

L'élément allongé 16 s'étend selon l'axe principal 14 entre une première 60 et une deuxième 62 extrémités. L'élément allongé 16 comprend une tige 64 sensiblement cylindrique, ainsi qu'une tête 66 et un ergot 68 disposés respectivement à la première 60 et à la deuxième 62 extrémités dudit élément allongé.

Dans les modes de réalisation représentés, la tige 64 est une tige filetée. Un diamètre maximal de la tige 64 est inférieur à une dimension transversale minimale de la surface interne 37 du corps 34, permettant une mobilité de l'élément allongé 16 à l'intérieur de la douille 12, 112.

Dans le cas de la douille 112, le diamètre maximal de la tige 64 est sensiblement égal au diamètre de l'orifice circulaire 56 de l'anneau 54, ledit anneau assurant un guidage axial de l'élément allongé 16.

La tête 66 de l'élément allongé 16 a une forme cylindrique en saillie radiale par rapport à la tige 64. La tête 66 présente une extrémité plane, sensiblement perpendiculaire à l'axe principal 14 et formant la première extrémité 60 de l'élément allongé.

La tête 66 de l'élément allongé 16 comporte une deuxième empreinte 70 sensiblement cylindrique, s'étendant selon l'axe principal 14 depuis ladite première extrémité 60. La deuxième empreinte 70 forme des deuxièmes surfaces de montage aptes à s'assembler à un outil d'installation afin que ledit outil entraîne en rotation l'élément allongé 16.

La deuxième empreinte 70 est par exemple une empreinte multilobée, telle que décrite dans le document EP2458232 au nom de la Demanderesse.

L'ergot 68 s'étend selon l'axe principal 14 et prolonge axialement la tige 64. Un diamètre dudit ergot est inférieur à un diamètre minimal de la tige 64.

L'ergot 68 comporte une collerette de sertissage 72 formant la deuxième extrémité 62 de l'élément allongé. Sur les figures 3 et 4, la collerette de sertissage 72 est représentée avant déformation.

L'élément d'accrochage 18 comprend une base 80 et au moins deux pattes 82 reliées à ladite base 80. Dans les modes de réalisation représentés, l'élément d'accrochage 18 comprend quatre pattes 82 identiques.

La base 80 de l'élément d'accrochage 18 a une forme sensiblement cylindrique et comporte une surface externe 84 de forme complémentaire de la surface interne 37 du corps 34. La base 80 est ainsi apte à coulisser dans la douille 12, 112 selon l'axe principal 14, tout en étant bloquée en rotation dans ladite douille.

La base 80 comprend une ouverture centrale 86 disposée selon l'axe principal 14. L'ouverture centrale 86 est pourvue d'un taraudage complémentaire du filetage de la tige 64 de l'élément allongé 16.

Les pattes 82 sont disposées autour de l'ouverture centrale 86 et s'étendent axialement à partir de la base 80, à travers la deuxième extrémité ouverte 32 de la douille 12, 112. Une extrémité de chaque patte 82 est formée par un bec d'accrochage 88.

Les pattes 82 et/ou leur jonction avec la base 80 présentent une certaine élasticité. Plus précisément, les pattes 82 sont déplaçables par rapport à l'axe principal 14 entre une position rétractée, dans laquelle les becs d'accrochage 88 sont au contact les uns des autres, et une position déployée, dans laquelle lesdits becs d'accrochage 88 sont écartés radialement les uns des autres.

Les figures 2, 3 et 4 montrent la fixation 10, 110 en position rétractée ; la figure 5 montre la fixation 110 en position déployée.

Dans la position rétractée et dans la position déployée, un diamètre maximal au niveau des becs d'accrochage 88 est respectivement inférieur et supérieur à un diamètre de la surface externe 36 du corps 34 de la douille 12, 112.

La bague d'assemblage 20 est assemblée à l'ergot 68 de l'élément allongé 16 et à l'ouverture centrale 86 de la base 80 de l'élément d'accrochage 18 ; la bague d'assemblage 20 assemble ainsi l'élément allongé 16 et l'élément d'accrochage 18.

Plus précisément, la bague d'assemblage 20 est fixe axialement par rapport à l'ergot, étant bloquée de part et d'autre par la tige 64 et par la collerette de sertissage 72. Ladite collerette est pliée radialement vers l'extérieur après déformation.

D'autre part, la bague d'assemblage 20 comporte une première 90 et une seconde 92 portions alignées axialement. Chacune des première 90 et seconde 92 portions a une surface externe cylindrique de révolution.

La première portion 90, disposée du côté de la tige 64, présente un diamètre externe inférieur ou égal à un diamètre minimal de l'ouverture centrale 86 de la base 80. Dans une configuration dite de débrayage de la fixation 10, 110, telle que représentée sur les figures 3 et 4, ladite première portion 90 est insérée dans ladite ouverture centrale 68.

La seconde portion 92, disposée du côté de la collerette de sertissage 72, présente au contraire un diamètre externe supérieur au diamètre minimal de l'ouverture centrale 86. Ainsi, une jonction entre les première 90 et seconde 92 portions forme une butée axiale par rapport à la base 80, empêchant une désolidarisation de l'élément allongé 16 et de l'élément d'accrochage 18 en configuration de débrayage.

La figure 5 montre un ensemble 200 pour l'installation de la fixation 10, 110 afin d'assembler deux structures préalablement percées. L'ensemble 200 comprend au moins une fixation 10, 110, ainsi qu'un nez de pose 202 selon un premier mode de réalisation. Le nez de pose 202 seul est représenté aux figures 6 à 9.

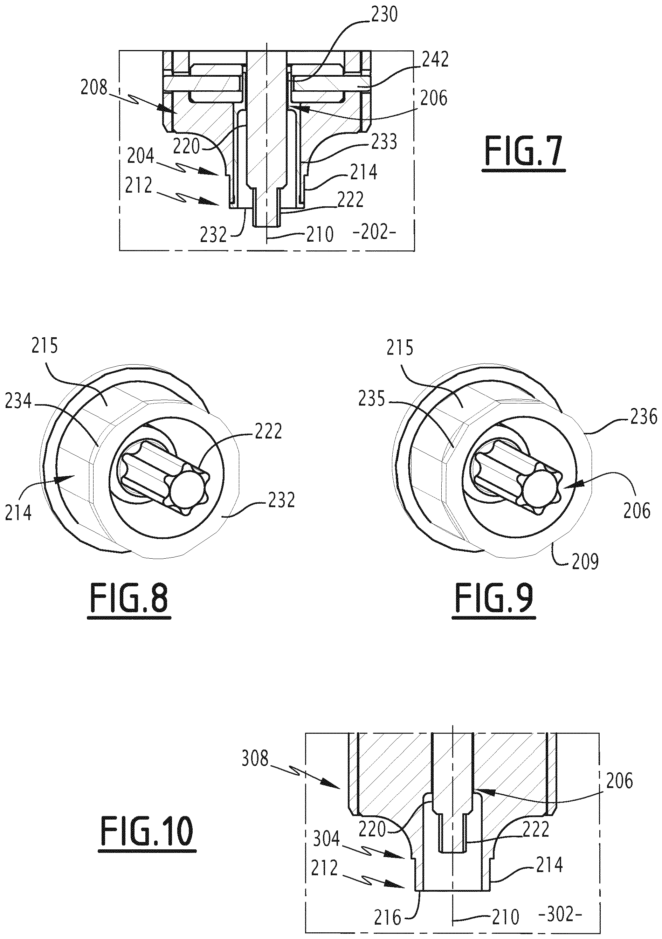

La figure 10 représente en coupe un nez de pose 302 selon un deuxième mode de réalisation. Chacun des nez de pose 202, 302 est apte à être utilisé pour une installation de la fixation 10, 110. Dans la description qui suit, les nez de pose 202 et 302 seront décrits simultanément, les éléments communs étant désignés par les mêmes numéros de référence.

Le nez de pose 202, 302 comprend notamment un premier 204, 304 et un deuxième 206 éléments d'installation, ainsi qu'un corps 208, 308 apte à être assemblé à un automate (non représenté). Le nez de pose 202 des figures 5 à 9 comporte en outre un élément de blocage 209.

Le premier élément d'installation 204, 304 est un manchon tubulaire, s'étendant selon un axe de pose 210. Le premier élément d'installation 204, 304 comporte une partie arrière reliée au corps 208, 308, ainsi qu'une partie frontale 212.

La partie frontale 212 présente une forme apte à s'emmancher dans la première empreinte 40 de la tête élargie 35 de la douille 12, 112. En particulier, la partie frontale 212 comporte une surface radiale 214 ; ladite surface radiale comprend des surfaces courbes de forme complémentaire de la surface interne cylindrique 42, alternées avec des méplats 215 complémentaires des méplats 46 de la première empreinte 40.

La partie frontale 212 comporte en outre une surface d'extrémité 216 plane. Dans le mode de réalisation 302 de la figure 10, la surface d'extrémité 216 est destinée à venir au contact du premier épaulement 44 de la douille 12, 112.

Le deuxième élément d'installation 206 est disposé à l'intérieur du premier élément d'installation 204, 304 ; ledit deuxième élément est mobile en rotation et en translation autour de l'axe de pose 210 par rapport audit premier élément d'installation 204, 304.

Le deuxième élément d'installation 206 comporte un fût 220 et une pointe 222. Ladite pointe 222, notamment visible en perspective sur les figures 8 et 9, est configurée pour s'emmancher dans la deuxième empreinte 70 de la tête 66 de l'élément allongé 16.

Par ailleurs, le deuxième élément d'installation 206 est relié à un moteur du nez de pose 202, 302, ou de l'automate, ou encore à un outillage manuel, de sorte à pouvoir exercer un couple de torsion sur l'élément allongé 16.

De préférence, la première empreinte 40 de la tête élargie 35 de la douille 12, 112 et la partie frontale 212 du premier élément d'installation 204, 304 sont configurés pour s'emmancher de manière à solidariser temporairement la fixation 10, 110 et le nez de pose 202, l'axe principal 14 étant confondu à l'axe de pose 210.

Plus précisément, la profondeur 45 de la première empreinte 40 est choisie suffisamment importante pour que les frottements entre ladite première empreinte 40 et la partie frontale 212 compensent le poids de la fixation 10, 110. Ladite fixation peut ainsi être transportée par l'automate équipé du nez de pose 202, 302 sans autre préhension que ledit nez de pose.

Le nez de pose 202 des figures 5 à 9 va maintenant être décrit plus précisément. L'élément de blocage 209 est disposé à l'intérieur du premier élément d'installation 304. L'élément de blocage 209 est un manchon tubulaire, s'étendant selon l'axe de pose 210, entre une extrémité arrière 230 et une extrémité avant 232. Adjacente à ladite extrémité avant 232, l'élément de blocage 209 comporte une partie tubulaire centrale 233, dont un diamètre extérieur permet la rotation dudit élément de blocage à l'intérieur premier élément d'installation 204. L'extrémité avant 232 est réalisée sous la forme d'une collerette s'étendant radialement vers l'extérieur par rapport à la partie tubulaire centrale 223. La surface d'extrémité 216 du premier élément d'installation 204 est destinée à venir axialement au contact de ladite collerette 232.

Une surface radiale 234 de la collerette 232 présente une section identique à la surface radiale 214 de la partie frontale 212 du premier élément d'installation 204. Plus précisément, la surface radiale 234 présente une alternance de méplats 235 et de portions d'arcs 236. Dans une position dite d'installation, représentée à la figure 8, l'élément de blocage 209 est dans une première position angulaire par rapport au premier élément d'installation 204, telle que les méplats 235 et 215 sont alignés. Dans la direction de l'axe de pose 210, la longueur desdits méplats 235, 215 alignés est égale, aux jeux près, à la profondeur 45 de la première empreinte 40 de la douille 12, 212.

La figure 9 représente une position dite de verrouillage du nez de pose 202. Dans ladite position de verrouillage, l'élément de blocage 209 est dans une deuxième position angulaire par rapport au premier élément d'installation 204 de sorte que les méplats 235 sont désalignés avec les méplats 215 dudit premier élément d'installation.

Un exemple de mécanisme d'entraînement en rotation de l'élément de blocage 209 est visible sur la figure 6. La partie arrière du premier élément d'installation 204 comporte au moins une ouverture latérale 240. Ladite ouverture latérale 240 s'étend autour de l'axe de pose 210 selon une portion angulaire correspondant au moins à un écart entre les première et deuxième positions angulaires de l'élément de blocage 209.

Le nez de pose 202 comporte en outre au moins une goupille 242 disposée radialement dans l'ouverture latérale 240. Une extrémité interne de la goupille 242 est fixée à l'extrémité arrière 220 de l'élément de blocage 209. Une extrémité externe 244 de ladite goupille 242 forme une saillie radiale à l'extérieur du premier élément d'installation 204. La goupille 242 est apte à se déplacer dans l'ouverture latérale 240 autour de l'axe de pose 210.

Le nez de pose 202 comporte en outre une bague tubulaire 250, disposée autour du corps 208 et de la partie arrière du premier élément d'installation 204. La bague 250 comporte une portion arrière 252 en saillie, par exemple moeltée ou rainurée pour faciliter sa préhension manuelle.

A proximité d'une extrémité avant 254, la bague 250 comporte au moins un orifice 256, de forme sensiblement complémentaire à celle d'une section de la goupille 242. L'orifice 256 a par exemple une forme légèrement oblongue, s'étendant axialement.

L'extrémité externe 244 de la goupille 242 est logée dans l'orifice 256. Ainsi, une rotation de la bague 250 par rapport au corps 208 du nez de pose 202 permet à la goupille 242 de se déplacer dans l'ouverture latérale 240 et d'entraîner en rotation l'élément de blocage 209. Une rotation manuelle de la bague 250 entraîne ainsi la rotation de l'élément de blocage 209 entre les positions d'installation et de verrouillage.

De préférence, le nez de pose 202 comporte deux ensembles ouverture latérale 240 / goupille 242 / orifice 256, lesdits deux ensembles étant disposés en vis-à-vis par rapport à l'axe 210.

D'autres mécanismes de rotation de l'élément de blocage 209 peuvent être employés, notamment adaptés à la mise en rotation de l'élément de blocage par un automate.

Un procédé d'installation de la fixation 10, 110 à l'aide d'un nez de pose 202, 302 va maintenant être décrit. La fixation 10, 110 est initialement en configuration de débrayage. Dans le cas du nez de pose 202 des figures 5 à 9, ledit nez de pose est dans la configuration d'installation de la figure 8.

Un automate équipé du nez de pose 202, 302 saisit la fixation 10, 110 en assemblant la partie frontale 212 du premier élément d'installation 204, 304 à la première empreinte 40 de la tête élargie 35 de la douille 12, 112. L'automate déplace ensuite la fixation 10, 110, ainsi assemblée au nez de pose 202, 302, jusqu'à une première et une deuxième structures à assembler, percées par un trou traversant.

L'automate introduit la fixation 10, 110 dans ledit trou traversant jusqu'à la mise en butée de la tête élargie 35 contre une face avant de la première structure. La douille 12, 112 est alors reçue dans le trou traversant et les becs d'accrochage 88 des pattes 82 dépassent de la deuxième structure.

La partie frontale 212 du premier élément d'installation 204, 304 exerce un effort axial contre la tête élargie 35 en direction de la première structure, afin de bloquer en rotation la douille 12, 112. L'automate introduit la pointe 222 du deuxième élément d'installation 206 dans la deuxième empreinte 70 de la tête 66 et exerce ensuite un couple de torsion sur l'élément allongé 16. La mise en rotation de la tige 64 conduit le filetage de ladite tige à s'engager dans le taraudage de l'ouverture centrale 86 de la base 80 de l'élément d'accrochage. L'élément allongé 16 se déplace axialement vers les becs d'accrochage 88 des pattes 82. La seconde portion 92 de la bague d'assemblage écarte alors radialement lesdits becs.

La rotation de l'élément allongé 16 est poursuivie jusqu'à ce que les becs d'accrochage 88 soient en appui axial contre une face arrière de la deuxième structure et que la tête 66 soit au contact du deuxième épaulement 52 et/ou de la rondelle élastique 22. Dans le cas de la douille 112, la rondelle 22 est prise en sandwich entre la tête 66 de l'élément allongé 16 et l'anneau de guidage 54.

Ainsi, la fixation 10, 110 solidarise l'une à l'autre les deux structures à assembler.

Un procédé similaire, avec une rotation de l'élément allongé 16 en sens opposé, permet de désolidariser la fixation 10, 110 du trou traversant desdites structures. La fixation 10, 110 peut ainsi être réutilisée.

Dans le cas du nez de pose 202 des figures 5 à 9, une variante au procédé ci-dessus permet de verrouiller la fixation 10, 110 audit nez de pose pour en faciliter le transport.

Plus précisément, selon ladite variante, un opérateur saisit la fixation 10, 110, et insère la partie frontale 212 du premier élément d'installation 204 et la collerette 232 de l'élément de blocage 209 dans la première empreinte 40 de la tête élargie 35 de la douille 12, 112. Les méplats 215, 235 sont alors alignés avec les méplats 46 de la douille 12, 112. L'opérateur tourne la bague 240 dans un sens, de sorte que l'élément de blocage 209 atteigne la position de verrouillage représentée en figure 9. Dans cette position, les portions d'arc 236 de la collerette 232 sont disposées dans le volume en creux 47 de la surface interne cylindrique 42 de la première empreinte 40, entre l'épaulement 44 et une extrémité axiale des méplats 46. Ainsi, la douille 12, 212 est bloquée axialement à l'intérieur du nez de pose 202 et peut être transportée dans n'importe quelle direction horizontale ou verticale jusqu'aux première et deuxième structures à assembler.

Une fois la fixation 10, 110 solidarisée aux structures à assembler, l'opérateur tourne la bague 250 dans l'autre sens, de sorte à replacer l'élément de blocage 209 en position d'installation puis à débloquer axialement la fixation 10, 110 du nez de pose 202.

Le verrouillage axial de la fixation 10, 110 dans le nez de pose 202 par l'élément de blocage 209 permet le transport de la fixation 10, 110 dans n'importe quelle direction sans risque de perte de ladite fixation. Il permet également le retrait de la fixation 10, 110 des deux structures en exerçant simplement une traction sur le nez de pose 202, même si du mastic interposé entre les structures à assembler a durci autour de la douille 12, 112.

## Revendications

1. Douille (12, 112) de fixation pour l'assemblage d'au moins deux structures préalablement percées, ladite douille s'étendant selon un axe principal (14) entre une première (30) et une deuxième (32) extrémités ouvertes, ladite douille comprenant un corps sensiblement cylindrique (34) et une tête élargie (35) ;
ladite tête élargie comprenant des premières surfaces de montage (42, 46) aptes à s'assembler à un premier élément d'installation (204) et à bloquer en rotation ledit premier élément d'installation autour de l'axe principal,
la douille comportant une première empreinte (40) sensiblement cylindrique s'étendant selon l'axe principal depuis la première extrémité, ladite première empreinte aboutissant à un épaulement plan (44) sensiblement perpendiculaire audit axe principal, la première empreinte et l'épaulement plan étant reçus à l'intérieur de la tête élargie,
les premières surfaces de montage (42, 46) étant formées par une surface interne de la première empreinte ;
la douille étant **caractérisée en ce que** certaines des premières surfaces de montage (46) s'étendent à partir de la première extrémité (30) de la douille mais n'atteignent pas l'épaulement plan (44), les premières surfaces de montage (42, 46) définissant ainsi un volume en creux (47) avec ledit épaulement plan.

2. Douille de fixation selon la revendication 1, dans laquelle les premières surfaces de montage comprennent des méplats (46) formés radialement en saillie par rapport à une surface interne cylindrique (42) de la première empreinte.

3. Fixation (10, 110) pour l'assemblage d'au moins deux structures préalablement percées, comprenant :
- une douille (12, 112) selon l'une des revendications précédentes, et
- un élément allongé (16), mobile à l'intérieur de la douille, ledit élément allongé comprenant une tige (64) sensiblement cylindrique et une tête (66) disposée à une première extrémité de ladite tige,
ladite tête de l'élément allongé comprenant une deuxième empreinte (70) sensiblement cylindrique s'étendant selon l'axe principal, ladite deuxième empreinte comprenant des deuxièmes surfaces de montage aptes à s'assembler à un deuxième élément d'installation (206) et à solidariser en rotation l'élément allongé et ledit deuxième élément d'installation autour de l'axe principal.

4. Fixation selon la revendication 3, dans laquelle la douille comporte un anneau interne (54) de guidage axial de la tige (64) de l'élément allongé, ledit anneau s'étendant radialement à partir d'une surface interne (37) du corps (34).

5. Fixation selon l'une des revendications 3 ou 4, dans laquelle la tige (64) de l'élément allongé est pourvue d'un filetage.

6. Fixation selon l'une des revendications 3 à 5, comportant en outre un élément d'accrochage (18), ledit élément d'accrochage comprenant :
- une base (80) apte à coulisser dans la douille selon l'axe principal, ladite base comprenant une ouverture centrale (86) ; et
- des pattes (82) reliées à ladite base autour de l'ouverture centrale, lesdites pattes s'étendant à travers la deuxième extrémité ouverte (32) de la douille, chaque patte comprenant un bec d'accrochage (88) ;
l'élément allongé étant mobile selon l'axe principal dans l'ouverture centrale (86) de la base, de sorte à déplacer radialement les pattes (82) entre une position rétractée et une position déployée.

7. Fixation selon la revendication 6 prise en combinaison avec la revendication 5, dans laquelle l'ouverture centrale (86) de la base est pourvue d'un taraudage complémentaire du filetage de la tige (64) de l'élément allongé.

8. Fixation selon la revendication 6 ou la revendication 7, dans laquelle une seconde extrémité de l'élément allongé comporte un ergot (68) s'étendant selon l'axe principal depuis la tige, ledit ergot ayant une dimension transversale inférieure à une dimension transversale de la tige,
la fixation comprenant en outre une bague (20) assemblée audit ergot, ladite bague formant une butée axiale par rapport à la base (80) de l'élément d'accrochage.

9. Fixation selon la revendication 8, dans laquelle la bague comporte une première (90) et une seconde (92) portions sensiblement cylindriques, alignées axialement, lesdites première et seconde portions ayant respectivement un diamètre externe inférieur et supérieur à un diamètre minimal de l'ouverture centrale (86) de la base, une jonction entre lesdites première et seconde portions formant la butée axiale.

10. Nez de pose (202, 302) pour l'assemblage d'une fixation selon l'une des revendications 3 à 9 avec au moins deux structures préalablement percées, ledit nez de pose comportant :
- un premier élément d'installation (204, 304) de forme tubulaire, ledit premier élément d'installation présentant une partie frontale (212) apte à s'emmancher dans la première empreinte (40) de la tête élargie de la douille (12, 112),
ledit premier élément d'installation étant configuré pour s'assembler aux premières surfaces de montage (42, 46) de la tête élargie de sorte à bloquer la douille en rotation autour de l'axe principal ; et
- un deuxième élément d'installation (206) disposé à l'intérieur du premier élément d'installation, ledit deuxième élément d'installation comprenant une pointe (222) configurée pour s'emmancher dans la deuxième empreinte (70) de la tête (66) de l'élément allongé (16) et pour s'assembler aux deuxièmes surfaces de montage,
le deuxième élément d'installation étant apte à exercer un couple de torsion sur ledit élément allongé ;
le nez de pose comprenant en outre un élément de blocage tubulaire (209) mobile en rotation à l'intérieur du premier élément d'installation (204), le deuxième élément d'installation (206) étant disposé à l'intérieur dudit élément de blocage, une extrémité axiale dudit élément de blocage présentant une collerette (232) s'étendant radialement vers l'extérieur,
la partie frontale (212) du premier élément d'installation et la collerette (232) présentant respectivement une première (214) et une deuxième (234) surfaces radiales de section identique,
le nez de pose étant tel que, dans une première configuration dite d'installation, lesdites première et deuxième surfaces radiales sont alignées axialement, ladite collerette étant ainsi apte à s'emmancher dans la première empreinte (40) de la tête élargie de la douille (12, 112), de sorte à venir en appui axial d'une part contre l'épaulement plan (44) de la douille (12, 112) et d'autre part contre la partie frontale (212) du premier élément d'installation.

11. Nez de pose selon la revendication 10, dans lequel les première (214) et deuxième (234) surfaces radiales sont configurées de sorte que, dans une deuxième configuration dite de verrouillage, une portion (236) de la deuxième surface radiale forme une saillie externe par rapport à la première surface radiale.

12. Ensemble (200) pour l'installation d'une fixation, ledit ensemble comprenant une fixation (10, 110) selon l'une des revendications 3 à 9 et un nez de pose (202) selon la revendication 11, ladite fixation et ledit nez de pose étant configurés de sorte que, dans la deuxième configuration de verrouillage, la collerette (232) est apte à être bloquée axialement entre l'épaulement plan (44) et les premières surfaces de montage (46) de la douille (12, 112).

13. Ensemble selon la revendication 12, dans lequel la collerette (232) du nez de pose est apte à être bloquée axialement dans le volume en creux (47) de la douille de la fixation.

## Patentansprüche

1. Befestigungs-Hülse (12, 112) für den Zusammenbau wenigstens zweier vorab durchbrochener Strukturen, wobei sich die besagte Hülse entlang einer Hauptachse (14) zwischen einem ersten (30) und einem zweiten (32) offenen Ende erstreckt, wobei die Hülse einen im Wesentlichen zylindrischen Körper (34) und einen erweiterten Kopf (35) aufweist,
wobei der erweiterte Kopf erste Montage-Flächen (42, 46) aufweist, die imstande sind, sich mit einem ersten Installationselement (204) zu kuppeln und das erste Installationselement hinsichtlich einer Drehung um die Hauptachse zu blockieren,
wobei die Hülse eine erste Aussparung (40) aufweist, die im Wesentlichen zylindrisch ist und sich entlang der Hauptachse von dem ersten Ende aus erstreckt, wobei die erste Aussparung an einer ebenen Schulter (44) abschließt, die im Wesentlichen senkrecht zu der Hauptachse ist, wobei die erste Aussparung und die ebene Schulter im Inneren des erweiterten Kopfs aufgenommen sind,
wobei die ersten Montageflächen (42, 46) durch eine Innenfläche der ersten Vertiefung gebildet sind,
wobei die Hülse **dadurch gekennzeichnet ist, dass** einige der ersten Montageflächen (46) sich ausgehend von dem ersten Ende (30) der Hülse erstrecken, aber nicht die ebene Schulter (44) erreichen, sodass die ersten Montageflächen (42, 46) mit der ebenen Schulter ein Hohlvolumen (47) definieren.

2. Befestigungs-Hülse gemäß Anspruch 1, wobei die ersten Montage-Flächen Flanken (46) aufweisen, die bezüglich einer zylindrischen Innenfläche (42) der ersten Aussparung radial vorstehend gebildet sind.

3. Befestigung (10, 110) für den Zusammenbau wenigstens zweier vorab durchbrochener Strukturen, aufweisend:
- eine Hülse (12, 112) gemäß irgendeinem der vorhergehenden Ansprüche, und
- ein längliches Element (16), das ins Innere der Hülse bewegbar ist, wobei das längliche Element eine Stange (64), die im Wesentlichen zylindrisch ist, und einen Kopf (66) aufweist, der an einem ersten Ende der Stange angeordnet ist, wobei der Kopf des länglichen Elements eine zweite Aussparung (70) aufweist, die im Wesentlichen zylindrisch ist und sich entlang der Hauptachse erstreckt, wobei die zweite Vertiefung zweite Montage-Flächen aufweist, die imstande sind, sich mit einem zweiten Installationselement (206) zu kuppeln und das längliche Element und das zweite Installationselement um die Hauptachse drehfest zu verbinden.

4. Befestigung gemäß Anspruch 3, wobei die Hülse einen Innenring (54) zur axialen Führung der Stange (64) des länglichen Elements aufweist, wobei sich der Ring ausgehend von einer Innenfläche (37) des Körpers (34) radial erstreckt.

5. Befestigung gemäß einem der Ansprüche 3 oder 4, wobei die Stange (64) des länglichen Elements mit einem Gewinde versehen ist.

6. Befestigung gemäß einem der Ansprüche 3 bis 5, ferner aufweisend ein Verankerungs-Element (18), wobei das Verankerungs-Element aufweist:
- eine Basis (80), die in der Hülse entlang der Hauptachse gleitverschiebbar ist, wobei die Basis eine zentrale Öffnung (86) hat, und
- mit der Basis verbundene Klauen (82) um die zentrale Öffnung herum, wobei die Klauen sich durch das zweite offene Ende (32) der Hülse hindurch erstrecken, wobei jede Klaue eine Verankerungs-Nase (88) aufweist,
wobei das längliche Element entlang der Hauptachse in der zentralen Öffnung (86) der Basis bewegbar ist, um die Klauen (82) zwischen einer Einfahrposition und einer Ausfahrposition zu verlagern.

7. Befestigung gemäß Anspruch 6 in Kombination mit Anspruch 5, wobei die zentrale Öffnung (86) der Basis mit einem Innengewinde versehen ist, das zu dem Gewinde der Stange (64) des länglichen Elements komplementär ist.

8. Befestigung gemäß Anspruch 6 oder Anspruch 7, wobei ein zweites Ende des länglichen Elements einen Zapfen (68) aufweist, der sich von der Stange aus entlang der Hauptachse erstreckt, wobei der Zapfen eine Querabmessung hat, die kleiner als eine Querabmessung der Stange ist,
wobei die Befestigung ferner einen Ring (20) aufweist, der auf den Zapfen montiert ist, wobei der Ring bezüglich der Basis (80) des Verankerungs-Elements einen axialen Anschlag bildet.

9. Befestigung gemäß Anspruch 8, wobei der Ring einen ersten (90) und einen zweiten (92) Abschnitt aufweist, die im Wesentlichen zylindrisch sind und axial ausgerichtet sind, wobei der erste und der zweite Abschnitt einen Außendurchmesser haben, die, jeweils zugeordnet, kleiner und größer als ein minimaler Durchmesser der zentralen Öffnung (86) der Basis sind, wobei eine Übergangsstelle zwischen dem ersten und dem zweiten Abschnitt den axialen Anschlag bildet.

10. Einbau-Nase (202, 302) für den Zusammenbau einer Befestigung gemäß einem der Ansprüche 3 bis 9 mit wenigstens zwei vorab durchbrochenen Strukturen, wobei die Einbau-Nase aufweist:
- ein erstes Installationselement (204, 304) mit einer rohrförmigen Gestalt, wobei das erste Installationselement einen Frontabschnitt (212) hat, der imstand ist, in die erste Aussparung (40) des erweiterten Kopfs der Hülse (12, 112) einzutauchen, wobei das erste Installationselement konfiguriert ist, sich mit den ersten Montageflächen (42, 46) des erweiterten Kopfs zu Kuppeln, um die Hülse hinsichtlich einer Drehung um die Hauptachse zu blockieren, und
- ein zweites Installationselement (206), das im Innern des ersten Installationselements angeordnet ist, wobei das zweite Installationselement eine Spitze (222) aufweist, die konfiguriert ist, um in die zweite Aussparung (70) des Kopfs (66) des länglichen Elements (16) einzutauchen und um sich mit den zweiten Montageflächen zu kuppeln,
wobei das zweite Installationselement imstande ist, ein Torsionsmoment auf das längliche Element auszuüben,
wobei die Einbau-Nase ferner ein rohrförmiges Blockier-Element (209) aufweist, das im Inneren des Installationselements (204) drehbewegbar ist, wobei das zweite Installationselement (206) im Inneren des Blockier-Elements angeordnet ist, wobei ein axiales Ende des Blockier-Elements einen Kragen (232) hat, der sich radial zur Außenseite hin erstreckt,
wobei der Frontabschnitt (212) des ersten Installationselements und der Kragen (232) jeweils zugeordnet eine erste (214) und eine zweite (234) radiale Fläche identischen Querschnitts haben,
wobei die Einbau-Nase derart ist, dass, in einer ersten, sogenannten Installationskonfiguration, die erste und die zweite radiale Fläche axial ausgerichtet sind, wobei der Kragen somit imstande ist, in die erste Aussparung (40) des erweiterten Kopfs der Hülse (12, 112) einzutauchen, um in axialen Anschlag einerseits gegen die ebene Schulter (44) der Hülse (12, 112) und andererseits gegen den Frontabschnitt (212) des ersten Installationselements zu kommen.

11. Einbau-Nase gemäß Anspruch 10, wobei die erste (214) und die zweite (234) radiale Fläche derart konfiguriert sind, dass, in einer zweiten, sogenannten Verriegelungskonfiguration ein Abschnitt (236) der zweiten radialen Fläche einen bezüglich der ersten radialen Fläche äußeren Vorsprung bildet.

12. Baugruppe (200) zur Installation einer Befestigung, wobei die Baugruppe aufweist eine Befestigung (10, 110) gemäß einem der Ansprüche 3 bis 9 und eine Einbau-Nase (202) gemäß Anspruch 11, wobei die Befestigung und die Einbau-Nase derart konfiguriert sind, dass, in der zweiten Verriegelungskonfiguration der Kragen (232) imstande ist, zwischen der ebenen Schulter (44) und den ersten Montageflächen (46) der Hülse (12, 112) axial blockiert zu sein.

13. Baugruppe gemäß Anspruch 12, wobei der Kragen (232) der Einbau-Nase imstande ist, in dem Hohlvolumen (47) der Hülse der Befestigung axial blockiert zu sein.

## Claims

1. Fastening sleeve (12, 112) for the assembly of at least two previously drilled structures, said sleeve extending along a main axis (14) between a first (30) and a second (32) open end, said sleeve comprising a substantially cylindrical body (34) and a widened head (35);
said widened head comprising first mounting surfaces (42, 46) capable of being assembled to a first installation element (204) and of blocking rotation of said first installation element about the main axis,
the sleeve comprising a first substantially cylindrical recess (40) extending along the main axis from the first end, said first recess opening at a planar shoulder (44) which is substantially perpendicular to said main axis, the first recess and the planar shoulder being received inside the widened head,
the first mounting surfaces (42, 46) being formed by an inner surface of the first recess;
the sleeve being **characterised in that** some of the first mounting surfaces (46) extend from the first end (30) of the sleeve but do not reach the planar shoulder (44), the first mounting surfaces (42, 46) thus defining a hollow space (47) with said planar shoulder.

2. Fastening sleeve according to claim 1, wherein the first mounting surfaces comprise flat portions (46) formed so as to protrude radially relative to a cylindrical inner surface (42) of the first recess.

3. Fastener (10, 110) for the assembly of at least two previously drilled structures, comprising:
- a sleeve (12, 112) according to any one of the preceding claims, and
- an elongate element (16) which is movable inside the sleeve, said elongate element comprising a substantially cylindrical rod (64) and a head (66) arranged at a first end of said rod,
said head of the elongate element comprising a second substantially cylindrical recess (70) extending along the main axis, said second recess comprising second mounting surfaces capable of being assembled to a second installation element (206) and of securing the elongate element and said second installation element in rotation about the main axis.

4. Fastener according to claim 3, wherein the sleeve comprises an inner ring (54) for axially guiding the rod (64) of the elongate element, said ring extending radially from an inner surface (37) of the body (34).

5. Fastener according to either claim 3 or claim 4, wherein the rod (64) of the elongate element is provided with a thread.

6. Fastener according to any one of claims 3 to 5, further comprising a hooking element (18), said hooking element comprising:
- a base (80) capable of sliding in the sleeve along the main axis, said base comprising a central opening (86); and
- legs (82) connected to said base around the central opening, said legs extending through the second open end (32) of the sleeve, each leg comprising a hooking nose (88);
the elongate element being movable along the main axis in the central opening (86) of the base so as to radially displace the legs (82) between a retracted position and a deployed position.

7. Fastener according to claim 6 taken in combination with claim 5, wherein the central opening (86) of the base is provided with an internal thread complementary to the thread of the rod (64) of the elongate element.

8. Fastener according to claim 6 or claim 7, wherein a second end of the elongate element comprises a pin (68) extending along the main axis from the rod, said pin having a transverse dimension which is smaller than a transverse dimension of the rod,
the fastener further comprising a ring (20) assembled to said pin, said ring forming an axial stop relative to the base (80) of the hooking element.

9. Fastener according to claim 8, wherein the ring comprises a first (90) and a second (92) substantially cylindrical portion, which portions are axially aligned, said first and second portions having an outside diameter which is smaller than and greater than, respectively, a minimum diameter of the central opening (86) of the base, a junction between said first and second portions forming the axial stop.

10. Setting nose (202, 302) for the assembly of a fastener according to any one of claims 3 to 9 with at least two previously drilled structures, said setting nose comprising:
- a first installation element (204, 304) of tubular form, said first installation element having a front portion (212) capable of fitting into the first recess (40) of the widened head of the sleeve (12, 112),
said first installation element being configured to fit together with the first mounting surfaces (42, 46) of the widened head so as to block rotation of the sleeve about the main axis; and
- a second installation element (206) arranged inside the first installation element, said second installation element comprising a tip (222) configured to fit into the second recess (70) of the head (66) of the elongate element (16) and to fit together with the second mounting surfaces,
the second installation element being capable of exerting a torque on said elongate element;
the setting nose further comprising a tubular blocking element (209) which is rotatable inside the first installation element (204), the second installation element (206) being arranged inside said blocking element, an axial end of said blocking element having a collar (232) extending radially outwards,
the front portion (212) of the first installation element and the collar (232) having a first (214) and a second (234) radial surface, respectively, of identical cross section,
the setting nose being such that, in a first configuration called the installation configuration, said first and second radial surfaces are axially aligned, said collar thus being capable of fitting into the first recess (40) of the widened head of the sleeve (12, 112) so as to come into axial abutment on the one hand against the planar shoulder (44) of the sleeve (12, 112) and on the other hand against the front portion (212) of the first installation element.

11. Setting nose according to claim 10, wherein the first (214) and second (234) radial surfaces are configured such that, in a second configuration called the locking configuration, a portion (236) of the second radial surface forms an external protrusion relative to the first radial surface.

12. Assembly (200) for the installation of a fastener, said assembly comprising a fastener (10, 110) according to any one of claims 3 to 9 and a setting nose (202) according to claim 11, said fastener and said setting nose being configured such that, in the second, locking configuration, the collar (232) is capable of being axially blocked between the planar shoulder (44) and the first mounting surfaces (46) of the sleeve (12, 112).

13. Assembly according to claim 12, wherein the collar (232) of the setting nose is capable of being axially blocked in the hollow space (47) of the fastening sleeve.
